# EUROPEAN PATENT SPECIFICATION

(11) **EP 3 392 185 B1**
(45) Date of publication and mention of the grant of the patent: **24.07.2024**
(21) Application number: 18168292.3
(22) Date of filing: 19.04.2018
(51) Int. Cl.: B66B 7/06, E04B 1/94

(54) **TENSION MEMBER FOR ELEVATOR SYSTEM BELT**
ZUGTRÄGERELEMENT FÜR AUFZUGSYSTEMRIEMEN
ÉLÉMENT DE TRACTION POUR COURROIES DE SYSTÈMES D'ASCENSEUR

(30) Priority: 20.04.2017 US 201762487828 P
(43) Date of publication of application: 24.10.2018
(73) Proprietor: Otis Elevator Company, Farmington, Connecticut 06032 (US)
(72) Inventor: GUILANI, Brad, Farmington, CT Connecticut 06032 (US)
(74) Representative: Schmitt-Nilson Schraud Waibel Wohlfrom Patentanwälte Partnerschaft mbB

(56) References cited:
- EP-A1- 2 361 212
- CN-A- 105 672 009
- DE-A1- 102011 005 323
- JP-A- H11 323 749
- ANONYMOUS: "Study of a Cardanol-Based Benzoxazine as Reactive Diluent and Toughening Agent of Conventional Benzoxazines - ScienceDirect", 1 January 2011 (2011-01-01), XP093038686, Retrieved from the Internet <URL:https://www.sciencedirect.com/science/article/pii/B9780444537904000643> [retrieved on 20230412]

## Description

Embodiments disclosed herein relate to elevator systems, and more particularly to load bearing members to suspend and/or drive elevator cars of an elevator system.

Elevator systems are useful for carrying passengers, cargo, or both, between various levels in a building. Some elevators are traction based and utilize load bearing members such as belts for supporting the elevator car and achieving the desired movement and positioning of the elevator car.

Where a belt is used as a load bearing member, a plurality of tension members, or cords, are embedded in a common jacket. The jacket retains the cords in desired positions and provide a frictional load path. In an exemplary traction elevator system, a machine drives a traction sheave with which the belts interact to drive the elevator car along a hoistway. Belts typically utilize tension members formed from steel elements, but alternatively may utilize tension members formed from synthetic fibers or other materials, such as carbon fiber composites.

In a carbon fiber composite tension member, the members have good strength to weight characteristics, but typically have reduced high temperature performance compared to tension members formed from steel wires.

EP 2 361 212 A1 discloses elevator support means for supporting and/or moving at least one elevator cabin, wherein the elevator support means can be guided and driven at least by way of a drive pulley of a prime mover of an elevator system, and wherein the support means comprises a polymeric casing member and at least one tensioning support embedded in the casing member, said at least one tensioning support extending in the longitudinal direction of the support means, wherein the tensioning support comprises a twisted braiding of yarns, and wherein the yarns are formed from filaments made of synthetic and/or mineral fiber material.

CN 105 672 009 A shows an elevator traction belt. The traction belt comprises a wrapping layer and at least one bearing body sleeved with the wrapping layer. Each belt comprises basalt fibers and a resin matrix which are compounded together.

In one embodiment, a belt for an elevator system includes the features of claim 1.

In this or other embodiments, the plurality of mineral load carrying fibers are configured to enhance a fire resistance of the tension members.

Additionally or alternatively, in this or other embodiments, the plurality of mineral load carrying fibers have a sustained operating temperature of about 820° Celsius.

Additionally or alternatively, in this or other embodiments, the plurality of mineral load carrying fibers have a melting temperature of about 1450° Celsius.

Additionally or alternatively, in this or other embodiments, the plurality of mineral load carrying fibers have a density of about 2.75 g/cm3.

Additionally or alternatively, in this or other embodiments, the plurality of mineral load carrying fibers have a tensile strength of about 4840 megapascals (MPa).

In another embodiment, an elevator system includes the features of claim 7.

The following descriptions should not be considered limiting in any way. With reference to the accompanying drawings, like elements are numbered alike:
FIG. 1 is a schematic illustration of an embodiment of an elevator system;
FIG. 2 is a schematic cross-sectional view of an embodiment of an elevator system belt; and
FIG. 3 is a schematic cross-sectional view of an embodiment of a tension member of an elevator system belt.

A detailed description of one or more embodiments of the disclosed apparatus and method are presented herein by way of exemplification and not limitation with reference to the Figures.

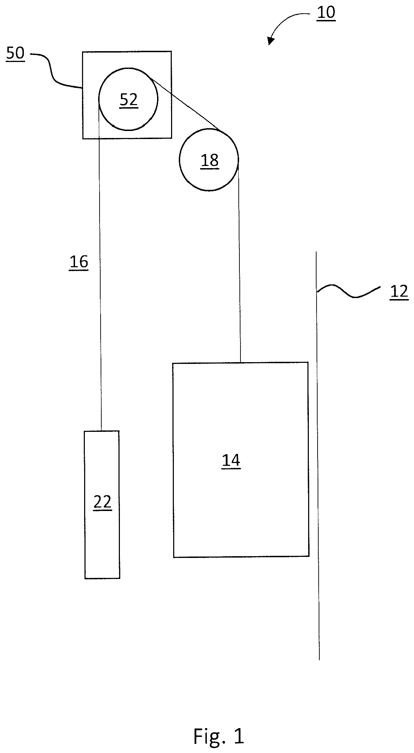

Shown in FIG. 1, is a schematic view of an exemplary traction elevator system 10. Features of the elevator system 10 that are not required for an understanding of the present invention (such as the guide rails, safeties, etc.) are not discussed herein. The elevator system 10 includes an elevator car 12 operatively suspended or supported in a hoistway 14 with one or more belts 16. The one or more belts 16 interact with one or more sheaves 18 to be routed around various components of the elevator system 10. The one or more belts 16 could also be connected to a counterweight 22, which is used to help balance the elevator system 10 and reduce the difference in belt tension on both sides of the traction sheave during operation.

The sheaves 18 each have a diameter 20, which may be the same or different than the diameters of the other sheaves 18 in the elevator system 10. At least one of the sheaves could be a traction sheave 52. The traction sheave 52 is driven by a machine 50. Movement of drive sheave by the machine 50 drives, moves and/or propels (through traction) the one or more belts 16 that are routed around the traction sheave 52. At least one of the sheaves 18 could be a diverter, deflector or idler sheave. Diverter, deflector or idler sheaves are not driven by a machine 50, but help guide the one or more belts 16 around the various components of the elevator system 10.

In some embodiments, the elevator system 10 could use two or more belts 16 for suspending and/or driving the elevator car 12. In addition, the elevator system 10 could have various configurations such that either both sides of the one or more belts 16 engage the one or more sheaves 18 or only one side of the one or more belts 16 engages the one or more sheaves 18. The embodiment of FIG 1 shows a 1:1 roping arrangement in which the one or more belts 16 terminate at the car 12 and counterweight 22, while other embodiments may utilize other roping arrangements.

The belts 16 are constructed to have sufficient flexibility when passing over the one or more sheaves 18 to provide low bending stresses, meet belt life requirements and have smooth operation, while being sufficiently strong to be capable of meeting strength requirements for suspending and/or driving the elevator car 12.

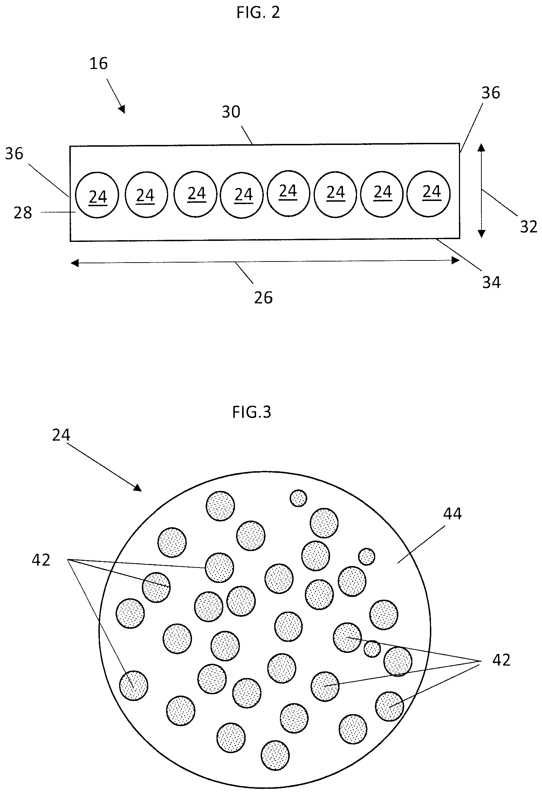

FIG. 2 provides a cross-sectional schematic of an exemplary belt 16 construction or design. The belt 16 includes a plurality of tension members 24 extending longitudinally along the belt 16 and arranged across a belt width 26. The tension members 24 are at least partially enclosed in a jacket material 28 to restrain movement of the tension members 24 in the belt 16 and to protect the tension members 24. The jacket material 28 defines a traction side 30 configured to interact with a corresponding surface of the traction sheave 52. Exemplary materials for the jacket material 28 include the elastomers of thermoplastic and thermosetting polyurethanes, polyamide, thermoplastic polyester elastomers, and rubber, for example. Other materials may be used to form the jacket material 28 if they are adequate to meet the required functions of the belt 16. For example, a primary function of the jacket material 28 is to provide a sufficient coefficient of friction between the belt 16 and the traction sheave 52 to produce a desired amount of traction therebetween. The jacket material 28 should also transmit the traction loads to the tension members 24. In addition, the jacket material 28 should be wear resistant and protect the tension members 24 from impact damage, exposure to environmental factors, such as chemicals and moisture, for example.

The belt 16 has a belt width 26 and a belt thickness 32, with an aspect ratio of belt width 26 to belt thickness 32 greater than one. The belt 16 further includes a back side 34 opposite the traction side 30 and belt edges 36 extending between the traction side 30 and the back side 34. While eight tension members 24 are illustrated in the embodiment of FIG. 2, other embodiments may include other numbers of tension members 24, for example, 6, 10 or 12 tension members 24. Further, while the tension members 24 of the embodiment of FIG. 2 are substantially identical, in other embodiments, the tension members 24 may differ from one another.

Referring now to FIG. 3, the tension members 24 are from a plurality of load-carrying fibers 42 disposed in a matrix material 44. The load carrying fibers 42 are basalt mineral fibers.

According to the invention, the load carrying fibers 42 are coated with a sizing compound (not shown) to enhance adhesion of the load carrying fibers 42 to the matrix material 44. According to the invention, the matrix material 44 is formed from polybenzoxazine. The matrix material 44 is selected to achieve a desired stiffness and strength of the tension member 24 in combination with the load carrying fibers 42. In some embodiments, the matrix material 44 is free of fillers, while in other embodiments the matrix material 44 may contain fillers and/or additives to enhance selected properties of the matrix material 44, such as strength and/or flame retardation.

The tension member 24 may be formed as thin layers, in some embodiments by a pultrusion process. In a standard pultrusion process, the load carrying fibers 42 are impregnated with the matrix material 44 and are pulled through a heated die and additional curing heaters where the matrix material 44 undergoes cross linking. A person having ordinary skill in the art will understand that controlled movement and support of the pulled load carrying fibers 42 may be used to form a desired linear or curved profile of the tension member 24. In an exemplary embodiment, the tension member 24 has a cross-sectional thickness of about 0.5 millimeters to about 4 millimeters. In another embodiment, the tension member 24 has a cross-sectional thickness of 1 millimeter. Further, in some embodiments such as shown in FIG. 2, the tension member 24 has a circular cross-section, while in other embodiments the tension member 24 may have other cross-sectional shapes, such as rectangular, oval or elliptical.

Basalt load carrying fibers 42 have superior temperature performance compared to carbon, glass, aramid and other typical load carrying fibers due at least in part to the relatively high crystallinity of the basalt load carrying fibers 42. Further, tensile strength of basalt load carrying fibers 42 is comparable to the tensile strength of carbon fiber load carrying fibers. Basalt load carrying fibers 42 have a sustained operating temperature of about 820° Celsius and a melting temperature of about 1450° Celsius. Basalt load carting fibers 42 further have a density of about 2.75 g/cm3, a tensile strength of about 4840 megapascals (MPa) and an elastic modulus of about 89 gigapascals (GPa). The superior high temperature performance of basalt load carrying fibers 42 and their comparable tensile strength compared to carbon fiber allows for an advantageously fire resistant tension member 24 to be constructed using basalt load carrying fibers 42.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A belt (16) for an elevator system (10), comprising:
a plurality of tension members (24) arranged along a belt width (26) and extending longitudinally along a length of the belt (16), each tension member (24) including a plurality of mineral load carrying fibers (42) disposed in a matrix material (44); and
a jacket material (26) at least partially encapsulating the plurality of tension members (24),
wherein the plurality of mineral load carrying fibers (42) are a plurality of basalt load carrying fibers,
**characterized in that**
the matrix material (44) is a polybenzoxazine; and
the basalt load carrying fibers are coated with a sizing compound.

2. The belt (16) according to claim 1,
wherein the plurality of mineral load carrying fibers (42) are configured to enhance a fire resistance of the tension members (24).

3. The belt (16) according to any of claims 1 to 2, wherein the plurality of mineral load carrying fibers (42) have a sustained operating temperature of about 820° Celsius.

4. The belt (16) according to any of claims 1 to 3, wherein the plurality of mineral load carrying fibers (42) have a melting temperature of about 1450° Celsius.

5. The belt (16) according to any of claims 1 to 4, wherein the plurality of mineral load carrying fibers (42) have a density of about 2.75 g/cm³.

6. The belt (16) according to any of claims 1 to 5, wherein the plurality of mineral load carrying fibers (42) have a tensile strength of about 4840 megapascals (MPa).

7. An elevator system (10), comprising:
a hoistway (14);
an elevator car (12) disposed in the hoistway (14) and movable therein;
the belt (16) of any of claims 1 to 6, operably connected to the elevator car (12) to suspend and/or drive the elevator car (12) along the hoistway (14).

## Patentansprüche

1. Riemen (16) für ein Aufzugssystem (10), umfassend:
eine Vielzahl von Zugelementen (24), die entlang einer Bandbreite (26) angeordnet ist und sich in Längsrichtung entlang einer Länge des Bandes (16) erstreckt, wobei jedes Zugelement (24) eine Vielzahl von mineralischen, lasttragenden Fasern (42) umfasst, die in einem Matrixmaterial (44) angeordnet ist; und
ein Mantelmaterial (26), das die Vielzahl von Zugelementen (24) mindestens teilweise einkapselt;
wobei die Vielzahl mineralischer, lasttragender Fasern (42) eine Vielzahl basalthaltiger, lasttragender Fasern ist,
**dadurch gekennzeichnet, dass**
das Matrixmaterial (44) ein Polybenzoxazin ist; und
die basalthaltiger, lasttragender Fasern mit einer Leimverbindung beschichtet sind.

2. Riemen (16) nach Anspruch 1,
wobei die Vielzahl der mineralischen, lasttragenden Fasern (42) dazu ausgelegt ist, die Feuerbeständigkeit der Zugelemente (24) zu verbessern.

3. Riemen (16) nach einem der Ansprüche 1 bis 2, wobei die Vielzahl der mineralischen, lasttragenden Fasern (42) eine dauerhafte Betriebstemperatur von etwa 820° Celsius aufweist.

4. Riemen (16) nach einem der Ansprüche 1 bis 3, wobei die Vielzahl der mineralischen, lasttragenden Fasern (42) eine Schmelztemperatur von etwa 1450° Celsius aufweist.

5. Riemen (16) nach einem der Ansprüche 1 bis 4, wobei die Vielzahl der mineralischen, lasttragenden Fasern (42) eine Dichte von etwa 2,75 g/cm³ aufweist.

6. Riemen (16) nach einem der Ansprüche 1 bis 5, wobei die Vielzahl der mineralischen, lasttragenden Fasern (42) eine Zugfestigkeit von etwa 4840 Megapascal (MPa) aufweist.

7. Aufzugssystem (10), umfassend:
einen Aufzugsschacht (14);
eine Aufzugskabine (12), die in dem Aufzugsschacht (14) angeordnet und darin bewegbar ist;
den Riemen (16) nach einem der Ansprüche 1 bis 6, der funktionell mit der Aufzugskabine (12) verbunden ist, um die Aufzugskabine (12) entlang des Schachts (14) aufzuhängen und/oder anzutreiben.

## Revendications

1. Courroie (16) pour un système d'ascenseur (10), comprenant :
une pluralité d'éléments de traction (24) disposés le long d'une largeur de courroie (26) et s'étendant longitudinalement sur une longueur de la courroie (16), chaque élément de traction (24) comprenant une pluralité de fibres porteuses de charges minérales (42) disposées dans un matériau de matrice (44) ; et
un matériau de gaine (26) encapsulant au moins partiellement la pluralité d'éléments de traction (24) ;
dans laquelle la pluralité de fibres porteuses de charges minérales (42) sont une pluralité de fibres porteuses de charges de basalte,
**caractérisée en ce que**
le matériau de matrice (44) est une polybenzoxazine ; et
les fibres porteuses de charges de basalte sont recouvertes d'un composé d'encollage.

2. Courroie (16) selon la revendication 1,
dans laquelle la pluralité de fibres porteuses de charges minérales (42) sont configurées pour améliorer la résistance au feu des éléments de traction (24).

3. Courroie (16) selon l'une quelconque des revendications 1 et 2, dans laquelle la pluralité de fibres porteuses de charges minérales (42) ont une température de fonctionnement soutenue d'environ 820° Celsius.

4. Courroie (16) selon l'une quelconque des revendications 1 à 3, dans laquelle la pluralité de fibres porteuses de charges minérales (42) ont une température de fusion d'environ 1 450° Celsius.

5. Courroie (16) selon l'une quelconque des revendications 1 à 4, dans laquelle la pluralité de fibres porteuses de charges minérales (42) ont une masse volumique d'environ 2,75 g/cm³.

6. Courroie (16) selon l'une quelconque des revendications 1 à 5, dans laquelle la pluralité de fibres porteuses de charges minérales (42) ont une résistance à la traction d'environ 4840 mégapascals (MPa).

7. Système d'ascenseur (10), comprenant :
une cage d'ascenseur (14) ;
une cabine d'ascenseur (12) disposée dans la cage d'ascenseur (14) et mobile dans celle-ci ;
une courroie (16) selon l'une quelconque des revendications 1 à 6, reliée fonctionnellement à la cabine d'ascenseur (12) pour suspendre et/ou entraîner la cabine d'ascenseur (12) le long de la cage d'ascenseur (14).
